(19)

Europäisches
Patentamt
European
Patent Office
Office européen
des brevets

(11) **EP 4 651 043 A1**

(12) **EUROPEAN PATENT APPLICATION**

(43) Date of publication:
**19.11.2025 Bulletin 2025/47**

(21) Application number: **24275060.2**

(22) Date of filing: **14.05.2024**

(51) International Patent Classification (IPC):
**G06N 20/10** *(2019.01)*     **G06N 20/20** *(2019.01)*
**G06F 16/55** *(2019.01)*     **G06F 16/65** *(2019.01)*
**G06N 3/096** *(2023.01)*     **G06N 3/0985** *(2023.01)*

(52) Cooperative Patent Classification (CPC):
**G06N 20/10; G06F 16/55; G06F 16/65;**
**G06N 20/20;** G06N 3/096; G06N 3/0985

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Victory Point**
**Frimley**
**Camberley, Surrey GU16 7EX (GB)**

(54) **DOMAIN GENERALISATION IN MACHINE LEARNING**

(57)     There is described a computer implemented method of training a machine learning model for domain generalisation. The method comprises: generating (202) a plurality of machine learning models which are different to each other; generating (204) a training data set and validation data set by partitioning a source data set using kernel k-means clustering to maximally domain shift the training set with respect to the validation set; training (206) and validating (208) the plurality of machine learning models; and selecting (210) the best performing model.

Fig.2

**Description**

FIELD

The present invention relates to training machine learning models for domain generalisation. In particular, the present invention relates to training a machine learning model which can better classify sounds from sea going vessels.

BACKGROUND

The ability for machine learning models to maintain high performance on data lying outside their training distribution, known as domain generalisation (DG), is important to deployment of models with improved performance.

In particular, hyperparameter choices based on in-distribution (ID) performance may not be optimal on an out-of-distribution (OOD) test domain. A common approach to finding optimal hyperparameters is testing on an OOD validation set (distinct from both the training and test data sets), normally created through the use of additional metadata (e.g., domain labels).

For example, historic techniques for hyperparameter optimisation in a DG setting include: ID accuracy, where the validation set is a randomly held-out subset of each training domain; OOD accuracy, where the validation set is an additional domain held-out using metadata (also referred to as leave-one-domain-out); and test-distribution accuracy, in which the validation set is a held-out subset of the test domain (also referred to in the literature as the oracle criterion), and which is generally accepted as providing an upper bound on performance and not usable in practice.

However, such approaches are still sub-optimal, yielding models with accuracy which still leaves much to be desired. Therefore improved techniques for model selection for domain generalisation are highly desirable.

SUMMARY

According to an aspect of the present invention, there is provided a computer implemented method of generating a machine learning model for domain generalisation. The method comprises generating a plurality of machine learning models that are different to each other, generating a training data set and validation data set for training the plurality of machine learning models by partitioning a source data set using kernel k-means clustering to maximally domain shift the training set with respect to the validation set, training the plurality of machine learning models using the training data set, validating the plurality of machine learning models to determine an accuracy of each of the machine learning models using the validation data set, and selecting the machine learning model with the highest determined accuracy as the final machine learning model (i.e. the "generated" model ready for application). Advantageously, the present techniques outperform traditional methods of model selection and hyperparameter tuning for domain generalisation.

In an example, generating a set of machine learning models may comprise generating machine learning models using different sets of hyperparameters, architectures or initialisations.

In an example, maximally domain shifting the training and validation data sets may comprise maximising a maximum mean discrepancy between training and validation sets by performing kernel k-means clustering. Beneficially, the maximum mean discrepancy provides a robust and convenient approach for determining domain shift.

In an example, the partitioning comprises setting the size of the training and validation sets according to a pre-set ratio. The preset ratio may be a set parameter, such as 80:20 training to validation, or may be user defined according to a required optimisation.

In an example, the partitioning comprises constraining the generated training and validation sets based on a distribution of classes in the source data set. For example, the classes may be constrained to have equivalent class distributions.

In an example, the partitioning comprises constraining the generated training and validation sets based on a distribution of domains in the source data set. For example, it may be desirable to enforce a uniform distribution of domains in the training and/or validation sets.

In an example, the source data may comprise sound data, and the machine learning model(s) may be trained to classify a type of sound according to classes of sounds included in the source data set. Suitably, in some examples the classes sounds comprise sounds produced by different types of marine vessel, such as at least one of pleasure vessel, cargo vessel, fishing vessel, and military vessel.

In an example, a domain of the source data set may comprise information corresponding to a recording environment of the sounds (or capture information of e.g., images). Suitably, in an example, the domain may comprise at least one of a location of in which the sound was recorded, a time of day that the sound was recorded, a weather event when the sound was recorded, and a position of sound recording equipment on a vessel.

In a related aspect of the present invention, there is provided a computer implemented method of inference on a machine learning model trained as above.

It will be appreciated that the features described herein in relation to any aspect may apply equally to another aspect and therefore, for the sake of conciseness, are not repeated.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

BRIEF DESCRIPTION OF THE FIGURES

Embodiments of the invention will now be described by way of example only with reference to the figures, in which:

Figure 1 shows an example electronic device;

Figure 2 shows an example method of generating a machine learning model;

Figure 3 shows a table showing average test domain accuracies for all datasets and model selection criteria;

Figure 4 shows results of an ablation study on the VLCS dataset;

Figure 5 shows a graph showing maximum mean discrepancy between training and validation sets versus test domain accuracy, by dataset; and

Figure 6 shows a graph showing maximum mean discrepancy between training and validation sets versus test domain accuracy, normalised by dataset, and plotted on a single set of axes. The mean for each split type is indicated with an asterisk (*). Note that there are 6 overlaying datapoints at the origin, corresponding to the medians of each dataset

DETAILED DESCRIPTION

By way of introduction, it has been determined that a robust set of hyperparameters (i.e., a robust model) which suit domain generalisation can be encouraged by maximally domain shifting the validation set from the training set, given some quantitative distance measure such as the maximum mean discrepancy (MMD), while still retaining a relevant distribution.

As an improvement to prior work, a kernel k-means clustering approach which maximises the empirical distance between clusters (weighted by cluster size) is discussed - e.g., maximised MMD. Suitably, herein is presented a modified clustering algorithm based on kernel k-means. Constraints may be introduced to the cluster assignment step to control the holdout fraction (i.e., the cluster sizes), and to preserve class and (optionally) domain/group distributions; this is then formulated and solved as a linear program, providing convergence guarantees not present in prior work. In addition, the Nyström method for low-rank approximation may be employed to make the algorithm tractable for large datasets.

The proposed techniques provide a model selection strategy based on OOD performance that does not require additional metadata, which is not always available. Advantageously, the present techniques are able to capture more nuances in real-world data than can be described by a single domain variable. For example, in tumour identification, domain shifts are often observed between tissue slides originating from different hospitals; this can be caused by variations in sample preparation methods or patient populations. Splitting the data along lines closer to the underlying cause of the shift, rather than a more loosely correlated proxy, may permit a more informed model selection which can result in hyperparameters better suited to the nature of the shift.

As another example, when identifying ship signatures in acoustic data, domain shifts are often observed between acoustic recordings originating from different locations; this can be caused by variations in environmental/weather conditions, site exposure, flow characteristics (flow rate, degree of turbulence etc.), new unseen sound events, acoustic propagation characteristics (water depth, seabed topography and composition, temperature and salinity profile, distance to the sound source etc.), or recording equipment and methods (including any electrical interference or noises generated by the recording platform). However, all this information is unlikely to be described in the available meta-data, which may, for example, only state the recording location. In this case, splitting the data along lines closer to the underlying cause of the shift, which are determined automatically by the clustering algorithm, rather than a more loosely correlated proxy, may permit a more informed model selection which can result in hyperparameters better suited to the nature of the shift.

The present techniques also serve as an advantageous way of disentangling spurious cues and ensuring these are not carried over to the validation set. For example, consider the Coloured MNIST (CMNIST) dataset (see M. Arjovsky, L. Bottou, I. Gulrajani, and D. Lopez-Paz, 'Invariant Risk Minimization', ArXiv, 2019), in which a digit's colour is spuriously correlated with its label. The present technique allows for perfect separation of the two colour groups. The colour shortcut would then be absent from the validation set, meaning the model selection can be based on recognition of the intended attribute (the digit) instead.

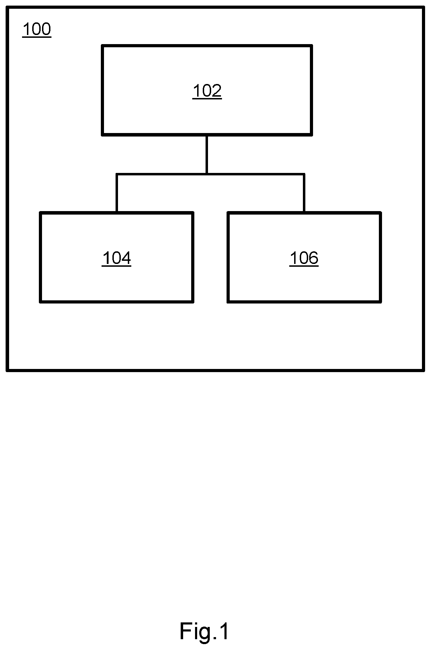

Figure 1 is a block diagram of a computing device 100 configurable to execute embodiments of the invention. The device will normally comprise, or be associated with, at least one processor 102, memory 104 and a communications interface 106.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. It will be understood that this is a non-exhaustive and non-limiting list of example devices.

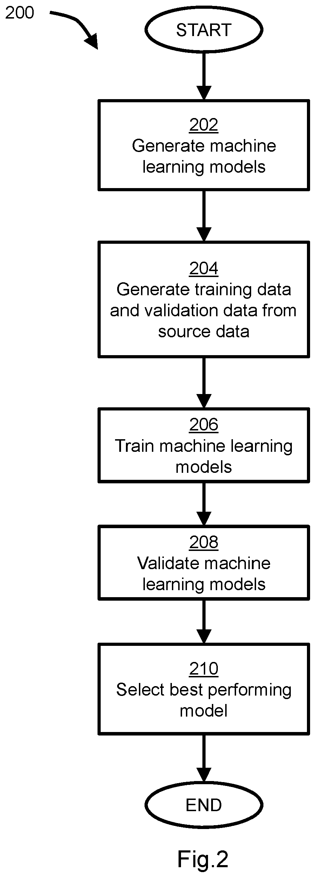

Figure 2 shows an example method that can be performed by means of software instructions being executed by the computing device 100, according to an embodiment. However, in some embodiments, one or more of the steps may be performed by a remote computing device, such as a server or a cloud service, that is in communication with the device 100. It will also be appreciated that some of the steps described herein may be re-ordered or omitted, additional steps may be performed, and although the steps are shown as being performed in sequence, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

At step 202, the method comprises generating a plurality of machine learning models. The machine learning models are generated for the same purpose, but are otherwise different in some fashion, such as having a different neural network configuration (e.g., different numbers of neurons, layer widths, etc), different sets of hyperparameters, or different initialisations of the same set of hyperparameters.

For example, the purpose of the machine learning models may be at least one of sound analysis or image analysis. Sound analysis might include classification based on sound data (for example, a digital sound signal). For example, classification of marine sounds, such as classification of a type of marine vessel based on the noise it produces, or detection of certain types of marine animals such as humpback whales. Image analysis might include, for example, tumour detection, object classification, or wild animal classification.

Example hyperparameters vary depending on the type of model and dataset being analysed, but might include learning rate, batch size, weight decay, data augmentation, lambda, discriminator weight decay, discriminator steps, gradient penalty, ADAM $\beta_1$, Gamma, and so on.

Depending on the intended purpose of the machine learning model, step 202 suitably comprises obtaining development data (otherwise termed source data herein) for use in training the machine learning models. Suitably, the source data comprises the type of data that the machine learning models are configured to receive as input. For example, where the models are configured for digital sound analysis, the development data may comprise sound files of various classes of object to be classified.

For example, for marine vessel classification, the development data may comprise sounds produced by different classifications of boats: the classes may be at least one of pleasure vessel, cargo vessel, fishing vessel, or military vessel. For marine animal detection, the classification may be binary in the sense that the data indicates the presence of the particular animal or not.

The development data may be collected from different domains. In the present context, domains correspond to different recording (sound) or capture (image) information; that is, the circumstances under which the data was collected. For example, for marine sound analysis, domains may include at least one of a location of the recording (e.g., which body of water the data was collected from, such as English Channel, North Sea, latitude and longitude, and so on), a time of day of the recording, weather during the recording, and position of recording equipment on a vessel.

At step 204, the method comprises generating a training data set and validation data set, for training the plurality of machine learning models, based on the development data. Specifically, the development data is partitioned (into training data and validation data) using kernel k-means clustering to maximally domain shift the training set with respect to the validation set.

Formally, let $S = \{(x_1, y_1, d_1), ..., (x_n, y_n, d_n)\}$ be the development set consisting of input-label-domain triplets over $X \times Y \times \mathcal{D}^S$. Similarly, let $E$ be the evaluation set over $X \times Y \times \mathcal{D}^E$, where $\mathcal{D}^S \cap \mathcal{D}^E = \varnothing$ (i.e., the development and evaluation domains are disjoint). For ease of notation, subscripts are used on sets to simplify set-builder notation, in two ways. Firstly, "slices" of a set are denoted using capitals, for example:

$$S_X = \{x : (x, y, d) \in S\}$$

$$S_{YD} = \{(y, d) : (x, y, d) \in S\}.$$

Additionally, a predicate can be specified to restrict the set to samples satisfying a condition. For example, to denote only inputs associated with a specific class $y'$:

$$S_{X, y = y'} = \{x : (x, y, d) \in S \wedge y = y'\}.$$

Suitably, the present techniques aim to use $S$ to produce a model $\theta : X \dashrightarrow Y$ that performs well on $E$. $\theta$ comprises a featuriser $\theta_F : X \to \mathcal{F}$ and label classifier $\theta_C : \mathcal{F} \to Y$, such that $\theta = \theta_C \circ \theta_F$. In order to tune hyperparameters, $S$ is partitioned into training and validation data sets, $T$ and $V$ respectively.

Maximally domain shifting $T$ and $V$ involves quantifying the degree of domain shift.

In the present techniques, it is preferred to measure the domain shift as the MMD between the distributions of feature sets $\theta_F[T_X]$ and $\theta_F[V_X]$, where $\theta_F[T_X]$ denotes the image of $T_x$ and $V_x$ under $\theta_F$.

Assume $\theta_F[T_X]$ and $\theta_F[V_X]$ are samples from distributions $\mathbb{P}_T, \mathbb{P}_V$ over $\mathcal{F}$. A positive-definite kernel $\kappa : \mathcal{F} \times \mathcal{F} \to \mathbb{R}$ induces a unique reproducing kernel Hilbert space (RKHS) $\mathcal{H}$ on $\mathcal{F}$, along with a mapping $\phi : \mathcal{F} \to \mathcal{H}$. The empirical mean map of $\mathbb{P}_T$ (and analogously for $\mathbb{P}_V$) in $\mathcal{H}$ is given by

$$\mu_{\mathbb{P}_T} := \mathbb{E}(\mathbb{P}_T) = \frac{1}{|T_X|} \sum_{f \in \theta_F[T_X]} \phi(f). \tag{1}$$

The MMD can then be estimated as the distance between means of samples embedded in $\mathcal{H}$:

$$MMD(\mathbb{P}_T, \mathbb{P}_V) = \left\| \mu_{\mathbb{P}_T} - \mu_{\mathbb{P}_V} \right\|_{\mathcal{H}}. \tag{2}$$

Suitably, the partitioning problem can then be formulated as

$$\arg\max_{T, V} \left\| \mu_{\mathbb{P}_T} - \mu_{\mathbb{P}_V} \right\|_{\mathcal{H}}. \tag{3}$$

This is equivalent to minimising the kernel k-means objective (optionally subject to a constraint as discussed below):

$$\arg\min_{T,V} \sum_{\substack{J\in\{T,V\}\\ f\in\theta_F[J_X]}} \left\|\phi(f) - \mu_{\mathbb{P}_J}\right\|_{\mathcal{H}}^2. \tag{4}$$

The relation can be derived by applying the law of total variance. The objective in (4) is to minimise the within-cluster sum of squared deviations from each centroid (in feature space). As the total variance is constant, this is equal to maximising the between-cluster sum of squares from each cluster centroid to the grand one, weighted by cluster size:

$$\arg\max_{T,V} \sum_{J\in\{T,V\}} |J_X| \left\|\mu_{\mathbb{P}_J} - \mu_{\mathbb{P}_S}\right\|_{\mathcal{H}}^2. \tag{5}$$

If the cluster sizes are fixed by a constraint, the $|J_X|$ term can be dropped from the objective function. In an example case of only two centroids, (5) is equivalent to directly maximising the distance between them, which is the formulation in (3).

Minimising the kernel k-means objective (4) can be solved by iterating between 2 parts until convergence:

Part 1: An update (maximisation) step is performed which computes the distance matrix $D \in \mathbb{R}^{n\times 2}$ from each point to each centroid using the kernel trick. For large datasets, the Nyström method may be employed to reduce the complexity of the kernel computations from $O(n^2)$ to $O(qn)$, by computing only a randomly selected submatrix of the full kernel, of size $q \times n$.

Part 2: a constrained assignment (expectation) step is performed that computes the one-hot cluster assignment matrix $U \in \{0,1\}^{n\times 2}$ that assigns each point to exactly one of either the training set or the validation set.

It will be appreciated that convergence to a local minimum is guaranteed because each step individually optimises (4).

Suitably, $U$ is the solution to the binary linear program (LP):

$$\arg\min_{U} \sum_{j\in[2]} \sum_{i\in[n]} U_{ij}D_{ij} \tag{6}$$

In the case of two domains, (6) is subject to

$$U_{ij} \in \{0,1\} \text{ for } i \in [n]; \ j \in [2] \tag{7}$$

$$\sum_{j\in[2]} U_{ij} = 1 \text{ for } i \in [n] \tag{8}$$

$$\sum_{i\in[n]|(y_i,d_i)=g} U_{ij} = \mathrm{round}\big(h\big|S_{(y,d)=g}\big|\big) \text{ for } g \in \mathcal{Y} \times \mathcal{D}; \ j = 1 \text{ or } 2. \tag{9}$$

Here, $[n]$ = {1,2, ..., $n$}.

(8) ensures that each point is assigned to only one cluster. The disjunctive constraint (9) indicates that $j$ can take a value of *either* 1 or 2. A disjunction arises because it does not matter which index is designated as the validation set. Which option has lower cost depends on the initialisation of the centroids. In the case of only two clusters, the easiest way to approach this is simply to solve two linear programs, one for each value of $j$, and then select the lower-cost solution. A similar approach can be employed when there are more than two clusters, or through the use of the big M method for disjunctive constraints.

The constraints satisfy Hoffman's sufficient conditions for total unimodularity (I. Heller and C. B. Tompkins, 'An Extension of a Theorem of Dantzig's', Linear Inequalities and Related Systems, 1956) - in particular, it can be seen that (8) and (9) form two disjoint sets of constraints, and every element of *U* is referenced at most once in each set. The consequence is that the LP will always have integer solutions, without having to enforce them explicitly. This means the binary constraint (7) can be relaxed to

$$0 \leq U_{ij} \leq 1 \text{ for } i = 1, \dots, n; \ j = 1,2 \qquad (10)$$

and the problem can be solved without integer constraints.

To enforce soft constraints, (9) can be replaced by the inequality

$$\text{round}\big(h\big(1 - \tau_g\big)\big|S_{(y,d)=g}\big|\big) \leq \sum_{i \in [n] \mid (y_i, d_i)=g} U_{ij}$$
$$\leq \text{round}\big(h\big(1 + \tau_g\big)\big|S_{(y,d)=g}\big|\big) \text{ for } g \in \mathcal{Y} \times \mathcal{D}; \ j = 1 \text{ or } 2, \qquad (11)$$

Where $\tau_g$ is the relative tolerance for constraint associated to *g*.

In the above, *T* and *V* may be of set sizes determined by a user-defined holdout fraction $h \in (0,1)$ (i.e., a user defined ratio); for example, partitioning 80:20 training data to validation data.

*T* and *V* may also be set to have equivalent class distributions. That is, each of *T* and *V* comprise the same ratio of each class in the source data. Put another way, where the source data comprises classes in a particular ratio, *T* and *V* comprise data with those classes in the same ratio. For example, where the source data comprises two classes each making up half of the data (i.e., a 50:50 split in data corresponding to each class), then *T* and *V* similarly comprise a 50:50 split in class data. This can be achieved by constraining the size of each label group in V to a fraction *h* the size of the corresponding group in *S*:

$$\big|V_{y=g}\big| = h\big|S_{y=g}\big|, \qquad \forall g \in \mathcal{Y}. \qquad (12)$$

It may also be desirable to control domain distributions - for example, certain training algorithms may require the domains in *T* to be uniformly represented to avoid overfitting. In this case, the constraints should be taken over all (*y*, *d*) pairs instead:

$$\big|V_{(y,d)=g}\big| = h\big|S_{(y,d)=g}\big|, \qquad \forall g \in \mathcal{Y} \times \mathcal{D}. \qquad (13)$$

The latter set of constraints (13) are generally preferred, although (12) can easily be substituted if desired (as this would further increase the MMD between $T_X$ and $V_X$), or if domain labels are unavailable.

At step 206, the resultant training data *T* is used to train the plurality of machine learning models. The training can be done using any conventional neural network training method using the training data as input to the training method.

At step 208 the plurality of now trained machine learning models are validated using the validation data *V*. That is, *V* is used as the input data to the plurality of trained machine learning models.

At step 210, the best performing model (based on *V*) is selected as the final machine learning model for future use (i.e., for inference). Preferably, the "best" model is selected based on determining a performance accuracy of the machine learning models when run on *V*. That is, how accurate the plurality of machine learning models are in correctly analysing the input data, whether that be correct classification of the input data (e.g., input sound data) or some other function.

Put another way, steps 206, 208 and 210 may be summarised as: a number of models are trained on *T* using different hyperparameters, then the "best" model, according to some criterion on *V*, is then selected and evaluated on *E*.

**Testing.** The benefits of any new model selection method can only be verified when the oracle criterion suggests there is "room for improvement" over a basic random split, i.e., there is a performance gap between the two. Thus, the experiments described in this section are set up to reflect this scenario. For example, it is noticed that unsupervised domain adaptation (UDA) tends to exhibit a larger gap than DG, and this is especially pronounced (perhaps unsurprisingly) for adversarial algorithms, which tend to be more sensitive to hyperparameter choices.

Two batches of experiments were run, to reflect both the UDA and DG settings. Each batch comprises an identical training setup applied to 3 different datasets. For the DG experiments, models are trained using the CORAL algorithm (B. Sun and K. Saenko, 'Deep CORAL: Correlation Alignment for Deep Domain Adaptation', ECCV, vol. 9915 LNCS, pp. 443-450, Jul. 2016, doi: 10.10071978-3-319-49409-8_35), with the clustering performed using constraints (10).

For the UDA experiments, the DANN algorithm (Y. Ganin et al., 'Domain-Adversarial Training of Neural Networks; JMLR, 2015) is used to adapt to an additional, unlabelled subset of test domain samples, as well as to align the training domains to each other. As DANN was observed to be more sensitive to domain imbalances, the validation split is set to preserve domain distributions, i.e., using the constraints defined in (11).

All feature extractors are finetuned on the entirety of 5 before the features are computed for the clustering, regardless of pretraining. Experiments are conducted using the DomainBed framework, with the Gurobi Optimizer used to solve the LPs. Training details are given in Table 1, and hyperparameter search details in Table 2. All other parameters follow the DomainBed default options. In total, the experiments involve training 5,160 models, requiring around 100 GPU-days of computation.

**Table 1.**

| Experimental parameter | Value |
|---|---|
| Hyperparameter random search size | 10 |
| Number of trials | 3 |
| Holdout fraction | 0.2 |
| UDA holdout fraction | 0.5 |
| Number of training steps | 3000 |
| Gaussian kernel bandwidth | 1 |
| Finetuning iterations before split | 3000 |
| Nyström subset size (if applicable) | 2000 |
| Architecture | ResNet-18 |
| Class balanced | True |

**Table 2.**

| Hyperparameter | Random distribution |
|---|---|
| Common | |
| Learning rate | $10^{Uniform(-5,-3.5)}$ |
| Batch size | $2^{Uniform(3,5.5)}$ |
| Weight decay | $10^{Uniform(-6,-2)}$ |
| Data augmentation | RandomChoice([False, True]) |
| DANN-specific | |
| Lambda | $10^{Uniform(-2,2)}$ |
| Discriminator weight decay | $10^{Uniform(-6,-2)}$ |
| Discriminator steps | $2^{Uniform(0,3)}$ |
| Gradient penalty | $10^{Uniform(-2,1)}$ |
| ADAM $\beta_1$ | RandomChoice([0, 0.5]) |
| CORAL-specific | |
| Gamma | $10^{Uniform(-1,1)}$ |

Below, the following public access datasets are utilised:

Camelyon17-WILDS: tumour detection in tissue samples across 5 hospitals, 2 classes and 455,954 samples. In keeping with the WILDS setup, the model in this case is trained from scratch rather than using pretrained weights. However, note that these results still cannot be compared directly with results from WILDS, as the DomainBed setup does not match exactly.

Humpbacks: detection of humpback whale vocalisations across 4 recording locations, 2 classes and 43,385 samples. This is the only dataset not to use the ResNet-18 architecture, and instead uses a custom CNN architecture and acoustic front-end described in Appendix A.

SVIRO: classification of vehicle rear seat occupancy across 10 car models, 7 classes and a balanced subset of 24,500 samples of the original dataset.

VLCS: object classification across 4 image datasets, 5 classes and 10,729 samples.

PACS: object classification across 4 image styles (photos, art, cartoons, and sketches), 7 classes and 9,991 samples.

Terra Incognita: classification of wild animals across 4 camera trap locations, 10 classes and 24,788 samples.

With the exception of Camelyon17, the datasets are all small enough that the entire kernel matrix can be computed. Thus, Camelyon17 is the only dataset for which the Nyström method is applied.

In total, 6 model selection methods are compared. These are: the random split; the leave-one-domain-out split; the test domain (oracle) validation set; a random split followed by mix-up augmentation on the validation set; and two variants of the cluster-based split described above, one using a linear kernel $\kappa(x,y) = x^T y$ (linear k-means) and the other a radial basis function (RBF) kernel $\kappa(x,y) = e^{-\gamma\|x-y\|2}$ with bandwidth parameter $\gamma = 1$.

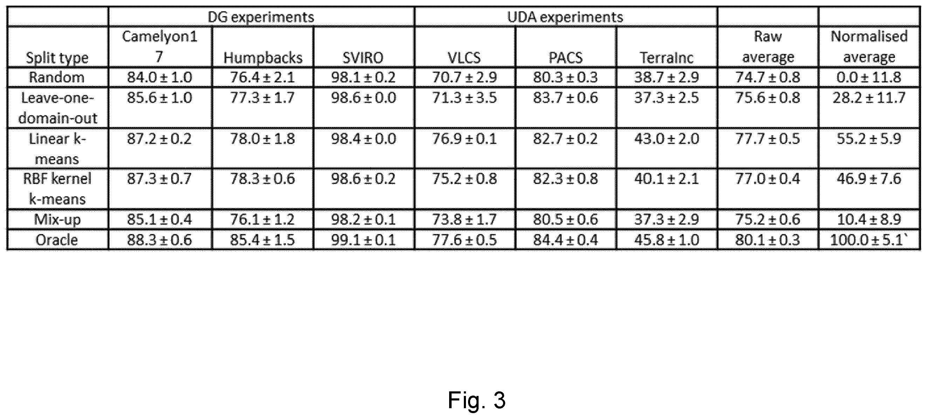

The results are shown in Figure 3, along with standard errors. In the following sections, a 95% confidence level is used when verifying whether two values have a statistically significant difference, which corresponds to nonoverlapping confidence intervals of 1.96 times the standard error reported (assuming normally distributed errors).

The range of possible performance improvement differs by dataset, as determined by the gap between the random split and oracle criterion; accuracy values should be considered relative to this scale when averaging across datasets. Therefore, a column of average normalised values is also shown, where each dataset is shifted and scaled such that the random split takes values of 0 and the oracle takes values of 100.

Where the validation set comprises multiple domains, model selection is based on average validation accuracy across these domains, as is the DomainBed default. Results based on worst-case accuracy are also shown in Appendix B. Overall, no significant difference in test accuracy is seen if worst-case validation accuracy is used, although the standard error does increase.

On average, the cluster-based splits provide a net absolute accuracy gain of around 3 percentage points compared to the random split, and 2 percentage points gain compared to leave-one-domain out validation. In relative terms, clustering is observed to close around 50% of the gap between the random split and oracle criterion, compared to 28% for leave-one-domain-out validation and 10% for mix-up. Overall, performance is slightly higher using the linear kernel than with the RBF kernel, although this is within margin of error. It is possible that the latter may be improved by taking more care into choosing a suitable value for $\gamma$.

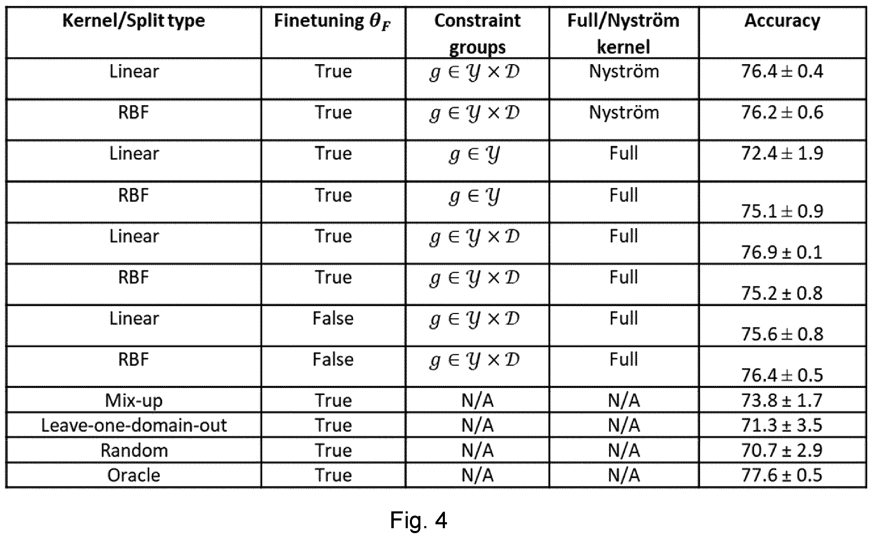

An ablation study conducted on the VLCS dataset is shown in Figure 4. This shows the effects of finetuning the feature extractor before clustering, the Nyström approximation, and the different constraint sets (12) and (13).

For this dataset, use of the Nyström approximation, as well as additional finetuning of $\theta_F$, are not observed to have significant effects on test accuracy. For the linear kernel, clustering with constraints (1) performs significantly lower than using constraints (2), however, for the RBF kernel, this difference is not observed.

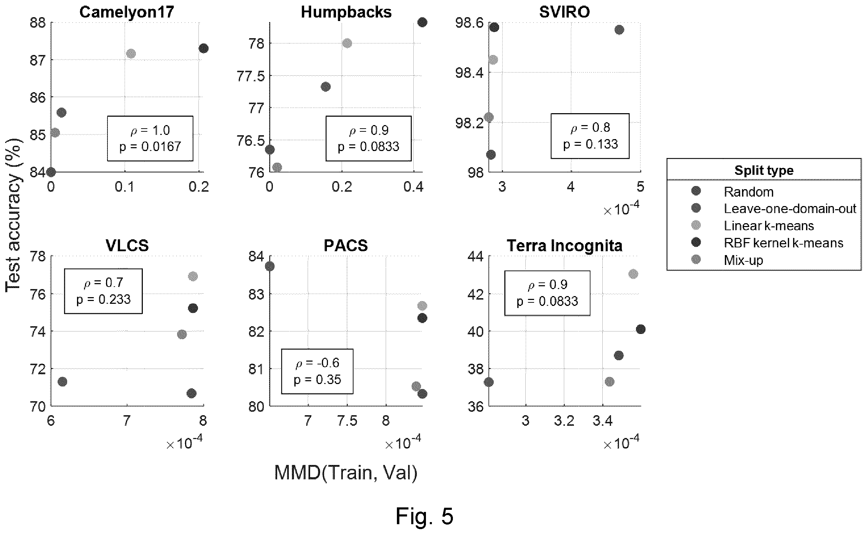

As stated above, it has been determined that increasing the MMD between the training and validation sets increases test domain accuracy. To provide empirical support for this, these two variables are plotted against each other in Figure 5, for each dataset. Again, the Nyström method is used to estimate the MMD for the Camelyon17 dataset due to its size. Each subplot in Figure 5 shows a different dataset, and each point in a subplot represents one of the five split types (not including the oracle). The correlation coefficients and associated $p$-values are also shown. As only monotonic associations are being tested for, Spearman's rank correlation $\rho$ is used.

The leave-one-domain-out method often produced large outlier values for the MMD, which can be seen in Figure 5 for all datasets other than Camelyon17 and Humpbacks. The reason for these outliers is unclear. Nonetheless, the correlation for all datasets, with the exception of PACS, is positive

Even with only five datapoints, Camelyon17 gives by far the clearest indication of a logarithmic-style relationship between the MMD and test accuracy, possibly because the dataset is large enough that a low-noise estimate of the MMD is possible. The results for this dataset are given in tabular form in Table 3, along with an additional ablation showing the effect of the different clustering constraints (12) and (13). For this dataset, the effect of preserving domain distributions on accuracy is negative.

**Table 3.**

| Split type | Accuracy | MMD $\times$1000 |
|---|---|---|
| Random | $84.0 \pm 1.0$ | $0.01 \pm 0.0003$ |
| Mix-up | $85.1 \pm 0.4$ | $5.4 \pm 0.2$ |
| Leave-one-domain-out | $85.6 \pm 1.0$ | $14.3 \pm 0.8$ |
| Linear k-means ($g \in Y \times \mathcal{D}$) | $86.5 \pm 1.3$ | $97.0 \pm 6.2$ |
| RBF kernel k-means ($g \in Y \times \mathcal{D}$) | $85.6 \pm 1.3$ | $183.1 \pm 2.0$ |
| Linear k-means ($g \in Y$) | $87.2 \pm 0.2$ | $108.3 \pm 2.6$ |
| RBF kernel k-means ($g \in Y$) | $87.3 \pm 0.7$ | $206.0 \pm 3.4$ |

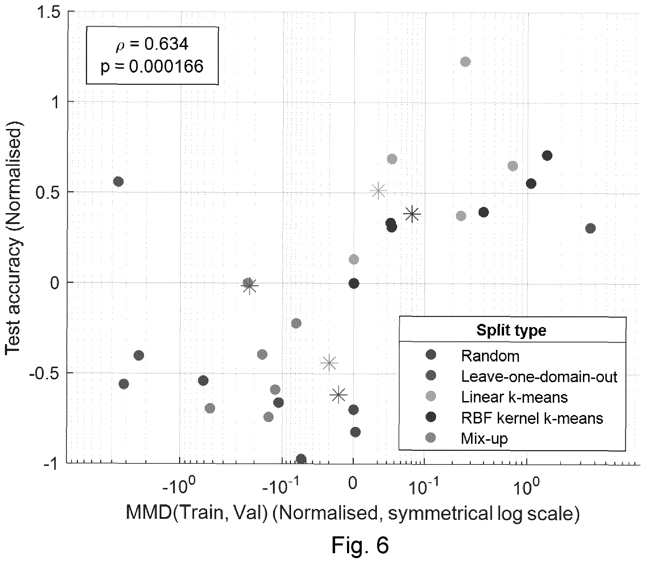

The results for all datasets plotted on a single set of axes are shown in Figure 6. As the ranges of both the accuracy and MMD values vary across datasets, these must be normalised in order to combine them. The median-IQR method (where each dataset is scaled to have zero median and unit interquartile range, on both axes) is used as this is the most robust to the large outliers mentioned. The MMDs are plotted on a symmetrical log scale to make the correlation more visually evident. The means for each split type are also indicated.

It is clear that maximising the MMD between the training and validation sets is more effective than previous efforts at domain shifting (for example, trying to create a domain shift of the same "type" as that of the test set, as a traditional metadata-based OOD validation split may do).

In summary, the above examples provide an improved method for model selection under domain shift, where the training-validation split is performed using a (constrained) kernel k-means clustering algorithm. In addition to outperforming traditional methods, this approach is grounded by an observed strong correlation between the MMD between the training and validation sets, and test domain accuracy.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer implemented method of generating a machine learning model for domain generalisation, comprising:

   generating a plurality of machine learning models, wherein each model in the plurality is different to each other model in the plurality;
   generating a training data set and validation data set for training the plurality of machine learning models, comprising partitioning a source data set into the training data set and validation data set using kernel k-means clustering to maximally domain shift the training set with respect to the validation set;
   training the plurality of machine learning models using the training data set;
   validating the plurality of machine learning models to determine an accuracy of each of the machine learning models on the validation data set; and
   selecting the machine learning model with the highest determined accuracy as the final machine learning model.

2. The method of claim 1, wherein each model in the plurality of machine learning models is associated with a different set of hyperparameters, architecture or initialisation.

3. The method of claim 1 or 2, wherein maximally domain shifting the training and validation data sets comprises maximising a maximum mean discrepancy between the training and validation sets through the use of kernel k-means clustering.

4. The method of any preceding claim, wherein the partitioning comprises setting the size of the training and validation sets according to a pre-set ratio.

5. The method of any preceding claim, wherein the partitioning comprises constraining the generated training and validation sets according to a pre-set distribution of classes

6. The method of claim 5, wherein constraining based on the distribution of classes comprises constraining to have equivalent class distributions in the training and validation data sets.

7. The method of any preceding claim, wherein the partitioning comprises constraining the generated training and validation sets according to a pre-set distribution of domains.

8. The method of any preceding claim, wherein the source data set comprises sound data, and the machine learning model is trained to classify a type of sound according to classes of sounds included in the source data set.

9. The method of claim 8, wherein the classes of sounds comprise sounds produced by different types of marine vessel.

10. The method of claim 9, wherein the types of marine vessel include at least one of pleasure vessel, cargo vessel, fishing vessel, and military vessel.

11. The method of claim 8, wherein a domain of the source data set comprises information corresponding to a recording environment of the sounds.

12. The method of claim 11, wherein the domain comprises at least one of a location of in which the sound was recorded, a time of day that the sound was recorded, a weather event when the sound was recorded, and a position of sound recording equipment on a vessel.

13. A computer implemented method of inference on a machine learning model according to any preceding claim.

100

102

104

106

Fig.1

200

START

202
Generate machine
learning models

204
Generate training data
and validation data from
source data

206
Train machine learning
models

208
Validate machine
learning models

210
Select best performing
model

END

Fig.2

<table>
<tr><th rowspan="2">Split type</th><th colspan="3">DG experiments</th><th colspan="3">UDA experiments</th><th rowspan="2">Raw average</th><th rowspan="2">Normalised average</th></tr>
<tr><td>Camelyon17</td><td>Humpbacks</td><td>SVIRO</td><td>VLCS</td><td>PACS</td><td>TerraInc</td></tr>
<tr><td>Random</td><td>84.0±1.0</td><td>76.4±2.1</td><td>98.1±0.2</td><td>70.7±2.9</td><td>80.3±0.3</td><td>38.7±2.9</td><td>74.7±0.8</td><td>0.0±11.8</td></tr>
<tr><td>Leave-one-domain-out</td><td>85.6±1.0</td><td>77.3±1.7</td><td>98.6±0.0</td><td>71.3±3.5</td><td>83.7±0.6</td><td>37.3±2.5</td><td>75.6±0.8</td><td>28.2±11.7</td></tr>
<tr><td>Linear k-means</td><td>87.2±0.2</td><td>78.0±1.8</td><td>98.4±0.0</td><td>76.9±0.1</td><td>82.7±0.2</td><td>43.0±2.0</td><td>77.7±0.5</td><td>55.2±5.9</td></tr>
<tr><td>RBF kernel k-means</td><td>87.3±0.7</td><td>78.3±0.6</td><td>98.6±0.2</td><td>75.2±0.8</td><td>82.3±0.8</td><td>40.1±2.1</td><td>77.0±0.4</td><td>46.9±7.6</td></tr>
<tr><td>Mix-up</td><td>85.1±0.4</td><td>76.1±1.2</td><td>98.2±0.1</td><td>73.8±1.7</td><td>80.5±0.6</td><td>37.3±2.9</td><td>75.2±0.6</td><td>10.4±8.9</td></tr>
<tr><td>Oracle</td><td>88.3±0.6</td><td>85.4±1.5</td><td>99.1±0.1</td><td>77.6±0.5</td><td>84.4±0.4</td><td>45.8±1.0</td><td>80.1±0.3</td><td>100.0±5.1`</td></tr>
</table>

Fig. 3

| Kernel/Split type | Finetuning $\theta_F$ | Constraint groups | Full/Nyström kernel | Accuracy |
|---|---|---|---|---|
| Linear | True | $g \in \mathcal{Y} \times \mathcal{D}$ | Nyström | $76.4 \pm 0.4$ |
| RBF | True | $g \in \mathcal{Y} \times \mathcal{D}$ | Nyström | $76.2 \pm 0.6$ |
| Linear | True | $g \in \mathcal{Y}$ | Full | $72.4 \pm 1.9$ |
| RBF | True | $g \in \mathcal{Y}$ | Full | $75.1 \pm 0.9$ |
| Linear | True | $g \in \mathcal{Y} \times \mathcal{D}$ | Full | $76.9 \pm 0.1$ |
| RBF | True | $g \in \mathcal{Y} \times \mathcal{D}$ | Full | $75.2 \pm 0.8$ |
| Linear | False | $g \in \mathcal{Y} \times \mathcal{D}$ | Full | $75.6 \pm 0.8$ |
| RBF | False | $g \in \mathcal{Y} \times \mathcal{D}$ | Full | $76.4 \pm 0.5$ |
| Mix-up | True | N/A | N/A | $73.8 \pm 1.7$ |
| Leave-one-domain-out | True | N/A | N/A | $71.3 \pm 3.5$ |
| Random | True | N/A | N/A | $70.7 \pm 2.9$ |
| Oracle | True | N/A | N/A | $77.6 \pm 0.5$ |

Fig. 4

Fig. 5

Fig. 6

## EUROPEAN SEARCH REPORT

Europäisches
Patentamt
European
Patent Office
Office européen
des brevets

**Application Number**

EP 24 27 5060

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GULRAJANI ISHAAN ET AL: "IN SEARCH OF LOST DOMAIN GENERALIZATION", , [Online] 4 May 2021 (2021-05-04), XP093217161, Retrieved from the Internet: URL:https://openreview.net/pdf?id=lQdXeXDo WtI> [retrieved on 2024-10-23] * the whole document * | 1-13 | INV. G06N20/10 G06N20/20 G06F16/55 G06F16/65 ADD. G06N3/096 G06N3/0985 |
| A | KANG GUOLIANG ET AL: "Contrastive Adaptation Network for Unsupervised Domain Adaptation", 2019 IEEE/CVF CONFERENCE ON COMPUTER VISION AND PATTERN RECOGNITION (CVPR), IEEE, 15 June 2019 (2019-06-15), pages 4888-4897, XP033687122, DOI: 10.1109/CVPR.2019.00503 [retrieved on 2020-01-08] * the whole document * | 1-13 | |
| A | IRFAN MUHAMMAD ET AL: "DeepShip: An underwater acoustic benchmark dataset and a separable convolution based autoencoder for classification", EXPERT SYSTEMS WITH APPLICATIONS, ELSEVIER, AMSTERDAM, NL, vol. 183, 5 June 2021 (2021-06-05), XP086757808, ISSN: 0957-4174, DOI: 10.1016/J.ESWA.2021.115270 [retrieved on 2021-06-05] * the whole document * | 1-13 | TECHNICAL FIELDS SEARCHED (IPC) G06N G06F |

The present search report has been drawn up for all claims

| Place of search | Date of completion of the search | Examiner |
|---|---|---|
| The Hague | 23 October 2024 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ARJOVSKY,** ; **L. BOTTOU** ; **I. GULRAJANI** ; **D. LOPEZ-PAZ**. Invariant Risk Minimization. *ArXiv*, 2019
- **I. HELLER** ; **C. B. TOMPKINS**. An Extension of a Theorem of Dantzig's. *Linear Inequalities and Related Systems*, 1956
- **B. SUN** ; **K. SAENKO**. Deep CORAL: Correlation Alignment for Deep Domain Adaptation. *ECCV*, July 2016, vol. 9915, 443-450
- **Y. GANIN et al.** Domain-Adversarial Training of Neural Networks. *JMLR*, 2015